# EUROPÄISCHE PATENTSCHRIFT

(11) **EP 1 136 739 B1**
(45) Veröffentlichungstag und Bekanntmachung des Hinweises auf die Patenterteilung: **12.11.2003**
(21) Anmeldenummer: 01105426.9
(22) Anmeldetag: 13.03.2001
(51) Int. Cl.: F16K 41/02, F16K 5/06

(54) **Feuerfeste Packung zum Abdichten der Schaltwelle einer Armatur**
Refractory spindle sealing for a valve
Joint d'étanchéité réfractaire pour tige de vanne

(30) Priorität: 22.03.2000 DE 20005320 U
(43) Veröffentlichungstag der Anmeldung: 26.09.2001
(73) Patentinhaber: JC Fàbrica de vàlvulas, s.a., 08830 Sant Boi de Llobregat (Barcelona) (ES)
(72) Erfinder: Claret, Jose, 08830 Sant Boi de Llobregat (Barcelona) (ES); Braig, Hans, 678720 Hoerdt (FR)
(74) Vertreter: Resch, Michael, Dipl.-Phys.

(56) Entgegenhaltungen:
- DE-B- 1 206 242
- GB-A- 802 497
- US-A- 1 783 762
- US-A- 4 457 491
- US-A- 4 462 568

## Beschreibung

Die Erfindung betrifft eine feuerfeste Packung zum Abdichten einer Schaltwelle einer Armatur, insbesondere eines Kugelhahns, die einerseits an der Schaltwelle und andererseits an einer der Schaltwelle gegenüberliegenden, zur Schaltwelle konzentrischen Wandung dichtend anliegt und die im Wesentlichen einen Block aus vorgepreßtem Graphit umfaßt. Solche Packungen werden in der Fachsprache üblicherweise auch "Firesafe-Packungen" genannt.

Armaturen, insbesondere auch Kugelhähne, die zum Absperren bzw. Regeln von brennbaren Flüssigkeiten eingesetzt werden, müssen besondere Voraussetzungen erfüllen, insbesondere müssen sie in der Regel zertifiziert sein. Wichtige Zulassungen sind beispielsweise die Firesafe-Zulassungen nach BS 6755 (British Standard) oder ISO 10497.

Beim Brand einer Anlage darf das Medium nicht nach außen austreten bzw. es muß der Kugelhahn eine Betätigung von der Offenstellung in die Schließstellung zulassen und damit den Durchgang abdichten. Die Durchgangsdichtheit im Brandfall erreicht man dadurch, daß nach der Zerstörung der üblicherweise vorhandenen PTFE-Dichtung durch die hohe Temperatur die Kugel gegen eine spezielle Dichtkante aus Metall gedrückt wird und so ein Dichteffekt erreicht wird.

Die Abdichtung nach außen erreicht man nach dem Stand der Technik durch den Einsatz feuerfester Dichtwerkstoffe. Die Schaltwellenabdichtung ist bei Firesafe-Hähnen allerdings ein Problem, da hier ein elastisches Material eingesetzt werden muß, um auch im normalen Betrieb einen guten Dichteffekt zu erzielen.

In den meisten Fällen kommen zur Abdichtung von Schaltwellen bei Firesafe-Hähnen vorgepresste Graphitpackungen zum Einsatz. Allerdings entsteht je nach Verpressungsgrad der Packung ein ganz erhebliches Drehmoment an der Schaltwelle, was im Sinne der leichtgängigen Bedienung der Armatur unerwünscht ist. Auch sind Fälle bekannt, in denen es sogar zum Festfressen, also zum Blockieren von Schaltwellen bei Kugelhähnen gekommen ist.

Der Erfindung liegt daher im Wesentlichen die Aufgabe zugrunde, eine feuerfeste Packung zu schaffen, die eine leichtgängige Bedienung der Armatur sicherstellt und ein Blockieren der Schaltwelle vermeidet, ohne daß gleichzeitig die Dichtheit der Abdichtung nachteilig beeinflußt würde.

Diese Aufgabe wird erfindungsgemäß im Wesentlichen dadurch gelöst, daß der Block aus vorgepreßtem Graphit mit einer Schicht aus PTFE-Nickelgewebe verpreßt ist, wobei die Schicht aus PTFE-Nickelgewebe im Wesentlichen an der Innenseite der Packung angeordnet ist und im eingebauten Zustand der Packung an der Schaltwelle anliegt.

Das in den Graphitblock integrierte, mit PTFE getränkte Nickelgewebe gewährleistet hervorragende Gleiteigenschaften im Bereich der Schaltwelle, so daß das Drehmoment der Schaltwelle drastisch reduziert wird.

Eine besonders gute Dichtwirkung an der Packung wird in bevorzugter Weiterbildung der Erfindung dann erreicht, wenn sich die Schicht aus PTFE-Nickelgewebe nur über einen Teil der axialen Höhe der Packung erstreckt, so daß die Packung über einen Teilbereich ihrer Kontaktfläche mit dem Graphitmaterial dichtend an der Schaltwelle anliegt.

Hierbei ist gemäß einem weiteren Merkmal der Erfindung die axiale Höhe der Schicht aus PTFE-Nickelgewebe um weniger als 10 mm kleiner als die axiale Höhe der Packung. Zweckmäßigerweise befindet sich derjenige Bereich der Packung, der ohne Zwischenschaltung der Schicht aus PTFE-Nickelgewebe unmittelbar an der Schaltwelle anliegt, an dem dem Schaltorgan der Armatur abgewandten Ende der Packung, wobei grundsätzlich auch eine andere Konfiguration möglich wäre.

Im Falle eines Brandes verflüchtigt sich das PTFE im Nickelgewebe aufgrund der hohen Temperatur und aufgrund des enormen Drucks dringt dann Graphit durch die jetzt freien Maschen des Nickelgewebes und gewährleistet weiterhin die Abdichtung.

Weitere vorteilhafte Merkmale der Erfindung ergeben sich aus den weiteren Unteransprüchen im Zusammenhang mit der nachfolgenden Beschreibung, in der ein bevorzugtes Ausführungsbeispiel der Erfindung anhand der Zeichnung näher erläutert wird.

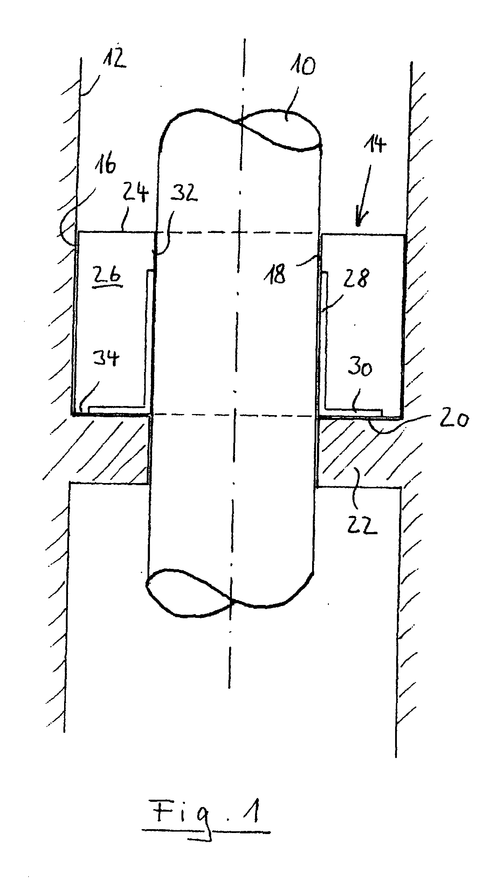

Die einzige Figur 1 der Zeichnung zeigt in halbschematischer Darstellung einen Schnitt durch die erfindungsgemäße feuerfeste Packung im eingebauten Zustand.

Mit der Bezugsziffer 10 ist die Schaltwelle eines Kugelhahns bezeichnet, mit der Bezugsziffer12 die hierzu konzentrische Wandung des Gehäuses des im Übrigen nicht näher dargestellten Kugelhahns. Die - nicht dargestellte - Kugel des Kugelhahns befindet sich in der Darstellung gemäß Figur 1 unten.

Eine insgesamt mit der Bezugsziffer 14 bezeichnete Firesafe-Packung in Form eines Hohlzylinders ist auf die Schaltwelle 10 aufgeschoben und liegt mit ihrer Aussenfläche 16 dichtend an der Wandung 12 und mit ihrer Innenfläche 18 dichtend an der Schaltwelle 10 an. Mit ihrer unteren Stirnfläche 20 liegt die Packung auf einem von der Wandung 12 nach innen bis nahe zur Schaltwelle ragenden Flansch 22 auf. Mittels eines nicht dargestellten Anpressorgans wie beispielsweise einer Stopfbuchsschraube, die auf die obere Stirnfläche 24 der Packung 14 einwirkt, wird die Packung in ihre Dichtposition gepreßt.

Die Packung 14 besteht im Wesentlichen aus einem Block 26 aus vorgepreßtem Graphit. Weiterhin umfaßt die Packung 14 Bereiche mit PTFEgetränktem Nickelgewebe 28 und 30. Das Nickelgewebe ist vorgeformt und wird zusammen mit dem Graphit verpreßt.

Eine erste Schicht 28 aus PTFE-Nickelgewebe befindet sich an der Innenseite 18 der Packung 14; sie erstreckt sich vom unteren Ende der Innenseite bis einige wenige Millimeter unterhalb des oberen Endes der Innenseite 18, so daß am oberen Bereich der Packung eine ringförmige, sich nach innen erstreckende "Dichtnase" 32 aus Graphit verbleibt, die dichtend an der Schaltwelle anliegt.

Eine zweite Schicht 30 aus PTFE-Nickelgewebe befindet sich an der unteren Stirnseite 20 der Packung 14; sie erstreckt sich vom inneren Ende der Stirnseite bis einige wenige Millimeter vor das radial äußere Ende der unteren Stirnseite, so daß am äußeren unteren Rand der Packung eine weitere ringförmige, sich nach unten erstreckende "Dichtnase" 34 aus Graphit verbleibt, die dichtend am Flansch 22 anliegt.

### Bezugszeichenliste:

- 10: Schaltwelle
- 12: Wandung
- 14: Packung
- 16: Außenfläche
- 18: Innenfläche
- 20: untere Stirnfläche
- 22: Flansch
- 24: obere Stirnfläche
- 26: Graphitblock
- 28: PTFE-Nickelgewebe
- 30: PTFE-Nickelgewebe
- 32: Dichtnase
- 34: Dichtnase

## Patentansprüche

1. Feuerfeste Packung (14) zum Abdichten einer Schaltwelle (10) einer Armatur, insbesondere eines Kugelhahnes, die im eingebauten Zustand einerseits an der Schaltwelle und andererseits an einer der Schaltwelle gegenüberliegenden, zur Schaltwelle konzentrischen Wandung (12) dichtend anliegt und die im Wesentlichen einen Block (26) aus vorgepreßtem Graphit umfaßt, **dadurch gekennzeichnet, daß** der Block (26) aus vorgepreßtem Graphit mit mindestens einer Schicht (28) aus PTFE-Nickelgewebe verpreßt ist, wobei die Schicht aus PTFE-Nickelgewebe im Wesentlichen an der Innenseite (18) der Packung angeordnet ist und im eingebauten Zustand der Packung an der Schaltwelle anliegt.

2. Packung nach Anspruch 1, **dadurch gekennzeichnet, daß** sich die Schicht (28) aus PTFE-Nickelgewebe nur über einen Teil der axialen Höhe der Packung (14) erstreckt.

3. Packung nach Anspruch 2, **dadurch gekennzeichnet, daß** die axiale Höhe der Schicht (28) um weniger als 10 mm kleiner ist als die axiale Höhe der Packung.

4. Packung nach Anspruch 2 oder 3, **dadurch gekennzeichnet, daß** derjenige Bereich (32) der Packung, der ohne Zwischenschaltung der Schicht (28) aus PTFE-Nickelgewebe unmittelbar an der Schaltwelle (10) anliegt, sich an dem dem Schaltorgan der Armatur abgewandten Ende der Packung befindet.

5. Packung nach einem der vorhergehenden Ansprüche, **dadurch gekennzeichnet, daß** an der dem Schaltorgan der Armatur zugewandten Stirnseite (20) der Packung eine zusätzliche Schicht (30) aus PTFE-Nickelgewebe vorgesehen ist.

6. Packung nach Anspruch 5, **dadurch gekennzeichnet, daß** sich die zusätzliche Schicht (30) nur über einen Teil der radialen Erstreckung der Packung erstreckt.

7. Packung nach Anspruch 6, **dadurch gekennzeichnet, daß** sich die zusätzliche Schicht (30) nicht über einen radial außenliegenden Bereich (34) der Stirnseite (20) der Packung erstreckt.

8. Packung nach Anspruch 7, **dadurch gekennzeichnet, daß** der ringförmige Bereich (34) der Stirnseite (20), an dem keine zusätzliche Schicht (30) aus PTFE-Nickelgewebe vorgesehen ist, eine Breite von weniger als 5 mm aufweist.

9. Packung nach einem der vorhergehenden Ansprüche, **dadurch gekennzeichnet, daß** der Graphitblock (26) zusammen mit dem PTFE-Nickelgewebe (28, 30) verpreßt ist.

10. Armatur, insbesondere Kugelhahn, für brennbare Flüssigkeiten, mit einer feuerfesten Packung (14) nach einem der vorhergehenden Ansprüche.

## Claims

1. Fire-resistant packing (14) for sealing a selector shaft (10) of a fitting, in particular a ball valve, which packing in the installed state lies sealing firstly on the selector shaft and secondly on the wall (12) opposite the selector shaft and concentric thereto, and which essentially comprises a block (26) of prepressed graphite, **characterised in that** the block (26) of prepressed graphite is compressed with at least one layer (28) of PTFE nickel fabric where the layer of PTFE nickel fabric is arranged essentially on the inside (18) of the packing and in the installed state of the packing lies on the selector shaft.

2. Packing according to claim 1, **characterised in that** the layer (28) of PTFE nickel fabric extends only over part of the axial height of the packing (14).

3. Packing according to claim 2, **characterised in that** the axial height of the layer (28) is smaller by less than 10 mm than the axial height of the packing.

4. Packing according to claim 2 or 3, **characterised in that** the area (32) of the packing which lies directly on the selector shaft (10) without an intermediate layer (28) of PTFE nickel fabric, is located on the end of the packing facing away from the selector element of the fitting.

5. Packing according to any of the previous claims, **characterised in that** an additional layer (30) of PTFE nickel fabric is provided on the face (20) of the packing facing the selector element of the fitting.

6. Packing according to claim 5, **characterised in that** the additional layer (30) extends only over part of the radial extent of the packing.

7. Packing according to claim 6, **characterised in that** the additional layer (30) does not extend over a radially outer area (34) of the face (20) of the packing.

8. Packing according to claim 7, **characterised in that** the annular area (34) of the face (20) on which no additional layer (30) of PTFE nickel fabric is provided, has a width of less 5 mm.

9. Packing according to any of the previous claims, **characterised in that** the graphite block (26) is compressed together with the PTFE nickel fabric (28, 30).

10. Fitting, in particular ball valve, for flammable fluids with a fire-resistant packing (14) according to any of the previous claims.

## Revendications

1. Joint d'étanchéité réfractaire (14) pour l'arbre de commande (10) d'une robinetterie, en particulier d'un robinet à tournant sphérique, qui à l'état monté est en contact hermétiquement d'un côté avec l'arbre de commande et de l'autre côté avec une paroi (12) opposée à l'arbre de commande, concentrique avec ce dernier et qui comprend essentiellement un bloc (26) en graphique préformé, **caractérisé en ce que** le bloc (26) en graphite préformé est pressé avec au moins une couche (28) en PTFE- tissu de nickel dans lequel la couche en PTFE- tissu de nickel est disposée essentiellement sur la face intérieure (18) du joint et ajustée avec l'arbre à l'état monté du joint.

2. Joint selon la revendication 1, **caractérisé en ce que** la couche (28) en PTFE- tissu de nickel ne s'étend que sur une partie de la hauteur axiale du joint d'étanchéité (14).

3. Joint selon la revendication 2, **caractérisé en ce que** la hauteur axiale de la couche (28) est inférieure de moins de 10 mm à la hauteur axiale du joint d'étanchéité.

4. Joint selon la revendication 2 ou 3, **caractérisé en ce que** la zone (32) du joint qui est directement en contact avec l'arbre (10) sans que la couche (28) en PTFE- tissu de nickel ne s'intercale, se trouve à l'extrémité du joint opposée à l'organe de commande de la robinetterie.

5. Joint selon l'une quelconque des revendications précédentes, **caractérisé en ce que** la face (20) du joint d'étanchéité tournée vers l'organe de commande de la robinetterie est pourvue d'une couche supplémentaire (30) en PTFE- tissu de nickel.

6. Joint selon la revendication 5, **caractérisé en ce que** la couche supplémentaire (30) ne s'étend que sur une partie du prolongement radial du joint.

7. Joint selon la revendication 6, **caractérisé en ce que** la couche supplémentaire (30) ne s'étend pas sur une zone radiale extérieure (34) de la face (20) du joint d'étanchéité.

8. Joint selon la revendication 7, **caractérisé en ce que** la zone annulaire (34) de la face (20) au niveau de laquelle aucune couche supplémentaire (30) en PTFE- tissu de nickel n'est prévue, présente une largeur inférieure à 5 mm.

9. Joint selon l'une quelconque des revendications précédentes, **caractérisé en ce que** le bloc en graphite (26) est pressé avec le PTFE- tissu de nickel (28, 30).

10. Robinetterie, en particulier robinet à tournant sphérique, pour liquides inflammables, avec un joint d'étanchéité réfractaire (14) selon l'une quelconque des revendications précédentes.
